# EUROPEAN PATENT SPECIFICATION

(11) **EP 4 329 983 B1**
(45) Date of publication and mention of the grant of the patent: **07.10.2026**
(21) Application number: 22715748.4
(22) Date of filing: 04.04.2022
(51) Int. Cl.: B24D 5/14, B24D 3/28, B24D 18/00, C09K 3/14

(54) **ABRASIVE CUT-OFF WHEELS AND METHODS OF MAKING THE SAME**
TRENNSCHLEIFSCHEIBEN UND VERFAHREN ZU IHRER HERSTELLUNG
MEULES TRONÇONNEUSES ABRASIVES ET LEURS PROCÉDÉS DE FABRICATION

(30) Priority: 30.04.2021 US 202163182082 P
(43) Date of publication of application: 06.03.2024
(73) Proprietor: 3M Innovative Properties Company, Saint Paul, Minnesota 55133-3427 (US)
(72) Inventor: BEIERMANN, Brett A., Saint Paul, Minnesota 55133-3427 (US); SCHILLO-ARMSTRONG, Melissa C., Saint Paul, Minnesota 55133-3427 (US)
(74) Representative: Vossius & Partner Patentanwälte Rechtsanwälte mbB
(86) International application number: PCT/IB2022/053113
(87) International publication number: WO 2022/229744

(56) References cited:
- EP-A2- 0 034 898
- WO-A1-2020/128783
- CN-A- 112 296 893
- US-A1- 2018 236 637

## Description

### TECHNICAL FIELD

The present disclosure broadly relates to bonded abrasive wheels, and especially to abrasive cut-off wheels.

### BACKGROUND

Resin-bonded cut-off wheels (COWs) are circular abrasive discs. In common implementations, portable COWs can be attached to an angle grinder and used to cut different materials, particularly metals. Such COWs often have an outer diameter between about 75 millimeters (mm) and about 230 mm, and a thickness of from about 0.8 mm to about 4 mm.

Cut-off wheels typically include abrasive particles, grinding aids, and phenolic resin to bind the mix together. The phenolic resin may consist of both a liquid resole resin and a powdered novolac resin.

Novolac resins have a few defining characteristics, including particle size, catalyst concentration (also known in the art as hexa content) and flow length. The flow length refers to the distance that a resin can flow at elevated temperature (125 °C) on an angled glass plate before curing occurs, following from test method ISO 8619:2003 "Plastics - Phenolic resin powder - Determination of flow distance on a heated glass plate".

During manufacture, pinhole voids may form in thin COWs (hereinafter COWs with a thickness of less than 1.6 mm). Thin COWs often exhibit undesirable "pinholes", or areas through the thickness in which no material is present and light can pass straight through the cut-off wheel. While these pinholes may have no significant effect on performance of the COW, they may be perceived by a user as a functional defect.

From US 2018/236637 A1 there is known an abrasive cut-off wheel having a thickness of less than or equal to 1.6 millimeters, wherein the abrasive cut-off wheel comprises at least one reinforcing scrim and abrasive particles retained in a phenolic binder, wherein the abrasive particles comprise first and second triangular abrasive platelets, wherein the first triangular platelets have a first average maximum side length and a first total weight, wherein the second triangular platelets have a second average maximum side length and a second total weight, wherein the first and second total weights combined comprise at least 30 weight percent of the abrasive cut-off wheel, wherein the ratio of the first average maximum side length to the second average maximum side length is 1.25:1 to 5:1, and wherein the ratio of first total weight to the second total weight is 1:2 to 5:1.

### SUMMARY

Unexpectedly, the present inventors discovered solutions to the pinholes problem discussed above. First, by using a low flow novolac resin, COWs were created with significantly reduced (near zero) numbers of pinholes. This was surprising because one would expect phenolic resin flow to tend to fill in pinholes. Second, the problem was also overcome by selecting the abrasive particles shapes and size appropriately. In many implementations, a combination of the two solutions is preferred.

In a first aspect, the present disclosure provides method of making an abrasive cut-off wheel, as defined in claim 8.

In a second aspect, the present disclosure provides an abrasive cut-off wheel, as defined in claim 1.

As used herein,
the term "shaped abrasive particle" refers to an abrasive particle that is shaped primarily by a molding process.

Features and advantages of the present disclosure will be further understood upon consideration of the detailed description as well as the appended claims.

### BRIEF DESCRIPTION OF THE DRAWINGS

FIG. 1 is a schematic side view of an exemplary cut-off wheel 100 made according to a first method of the present disclosure.
FIG. 1A is a schematic enlarged side view of cut-off wheel 100 taken along line 1A-1A.
FIG. 3 is a perspective view of an exemplary triangular platelet 140.
FIG. 4 is a perspective view of an exemplary triangular platelet 150.

Repeated use of reference characters in the specification and drawings is intended to represent the same or analogous features or elements of the disclosure. The figures may not be drawn to scale.

### DETAILED DESCRIPTION

Abrasive cut-off wheels according to the present disclosure can be made by a molding process. During molding, a curable phenolic resin that is liquid, powdered, or a combination of thereof, is mixed with the abrasive particles (i.e., shaped abrasive articles and optionally crushed abrasive particles). Often, a liquid medium (e.g., a resole phenolic resin or a solvent) is first applied to the abrasive particles to wet their outer surface, and then the wetted particles are mixed with a premix containing powdered novolac phenolic resin. The mixture is placed in a mold with at least one scrim (often two scrims disposed on top and bottom major surfaces of the mold. Once the mold is closed, it is heated under pressure to effect curing of the phenolic resin component(s).

Abrasive cut-off wheels according to the present disclosure may be made by compression molding, injection molding, transfer molding, or the like. The molding can be done either by hot or cold pressing or any suitable manner known to those skilled in the art.

Abrasive cut-off wheels according to the present disclosure comprise at least one scrim that reinforces the bonded abrasive wheel; for example, disposed on one or two major surfaces of the bonded abrasive wheel, or disposed within the bonded abrasive wheel along its midline. Examples of scrims include a woven or a knitted cloth. The fibers in the scrim may be made from glass fibers (e.g., fiberglass), organic fibers such as polyamide, polyester, or polyimide. In some instances, it may be desirable to include reinforcing staple fibers within the bonding medium, so that the fibers are homogeneously dispersed throughout the cut-off wheel.

Curable phenolic resins are typically included (on a solids basis) in an amount of from 5 to 30 percent by weight, more typically 10 to 25 percent by weight, and more typically 15 to 24 percent by weight, based of the total weight of the bonded abrasive wheel.

Useful curable phenolic resins may include novolac and resole phenolic resins. Novolac phenolic resins are characterized by being acid-catalyzed and having a ratio of formaldehyde to phenol of less than one, typically between 0.5:1 and 0.8:1. Resole phenolic resins are characterized by being alkaline catalyzed and having a ratio of formaldehyde to phenol of greater than or equal to one, typically from 1:1 to 3:1. Novolac and resole phenolic resins may be chemically modified (e.g., by reaction with epoxy compounds), or they may be unmodified.

Exemplary acidic catalysts suitable for curing phenolic resins include sulfuric, hydrochloric, phosphoric, oxalic, and p-toluenesulfonic acids. Alkaline catalysts suitable for curing phenolic resins include sodium hydroxide, barium hydroxide, potassium hydroxide, calcium hydroxide, organic amines, or sodium carbonate.

Curable phenolic resins are well-known and readily available from commercial sources. Examples of commercially available novolac resins include DUREZ 1364, a two-step, powdered phenolic resin available under the trade designation VARCUM (e.g., VARCUM 29302) from Durez Corporation of Addison, Texas; as HEXION AD5534 or HEXION 0224P from Hexion Specialty Chemicals, Inc. of Louisville, Kentucky; as Chemiplastica 7198 from Bi-Qem RESINS AB - Resins Division, Perstorp, Sweden; or as PREFERE 82 8750G from Dynea Erkner GmbH, Erkner, Germany. In some preferred embodiments of the present disclosure, a majority of the phenolic resin by mass has an inclined plate resin flow length of less than 30 mm according to test method ISO 8619:2003 (E) "Plastics - Phenolic resin powder - Determination of flow distance on a heated glass plate". Advantageously, this feature alone may significantly reduce or effectively eliminate pinholes in the finished abrasive cut-off wheel.

Examples of commercially available resole phenolic resins useful in practice of the present disclosure include those marketed by Durez Corporation under the trade designation VARCUM (e.g., in grades 29217, 29306, 29318, 29338, 29353); those marketed by Ashland Chemical Co. of Bartow, Florida under the trade designation AEROFENE (e.g., AEROFENE 295); PREFERE 92 5136G1 from Dynea Erkner GmbH; and those marketed by Kangnam Chemical Company Ltd. of Seoul, South Korea under the trade designation "PHENOLITE" (e.g., PHENOLITE TD-2207).

Curing temperatures of phenolic resins will vary somewhat with the phenolic resin(s) chosen, catalyst (if any), and wheel design. Selection of suitable conditions is within the capability of one of ordinary skill in the art. Exemplary conditions for curing a phenolic resin may include an applied pressure of about 20 tons per 4 inches diameter (224 kg/cm²) at room temperature followed by heating at temperatures up to about 185 °C for sufficient time to cure the phenolic resin(s).

Further details concerning abrasive cut-off wheels can be found in, for example, U. S. Pat. Nos. 9,180,573 (Givot et al.) and 10,300,581 (Schillo-Armstrong et al.).

Abrasive particles can be included in the cut-off abrasive wheel in any suitable amount, preferably 30 to 70 percent by weight, preferably 30 to 60 percent by weight, and more preferably 30 to 55 percent by weight, based on the total cured weight of the wheel.

Abrasive particles composed of crystallites of alpha alumina, magnesium alumina spinel, and a rare earth hexagonal aluminate may be prepared using sol-gel precursor alpha alumina particles according to methods described in, for example, U.S. Patent No. 5,213,591 (Celikkaya et al.). Similar methods also apply to zirconia sols and mixed alumina-zirconia sols.

In some embodiments, alpha alumina based ceramic shaped abrasive particles can be made according to a multistep process. Briefly, the method comprises the steps of making either a seeded or non-seeded sol-gel alpha alumina precursor dispersion that can be converted into alpha alumina; filling one or more mold cavities having the desired outer shape of the shaped abrasive particle with the sol-gel, drying the sol-gel to form precursor ceramic shaped abrasive particles; removing the precursor ceramic shaped abrasive particles from the mold cavities; calcining the precursor ceramic shaped abrasive particles to form calcined, precursor ceramic shaped abrasive particles, and then sintering the calcined, precursor ceramic shaped abrasive particles to form ceramic shaped abrasive particles. The process will now be described in greater detail.

The first process step involves providing either a seeded or non-seeded dispersion of an alpha alumina precursor that can be converted into alpha alumina. The alpha alumina precursor dispersion often comprises a liquid that is a volatile component. In one embodiment, the volatile component is water. The dispersion should comprise a sufficient amount of liquid for the viscosity of the dispersion to be sufficiently low to enable filling mold cavities and replicating the mold surfaces, but not so much liquid as to cause subsequent removal of the liquid from the mold cavity to be prohibitively expensive. In one embodiment, the alpha alumina precursor dispersion comprises from 2 percent to 90 percent by weight of the particles that can be converted into alpha alumina, such as particles of aluminum oxide monohydrate (boehmite), and at least 10 percent by weight, or from 50 to 70 percent by weight, 50 to 65 percent by weight, or 55 to 65 percent by weight of the volatile component such as water. Conversely, the alpha alumina precursor dispersion in some embodiments contains from 30 percent to 50 percent, or 40 percent to 50 percent, by weight solids.

Aluminum oxide hydrates other than boehmite can also be used. Boehmite can be prepared by known techniques or can be obtained commercially. Examples of commercially available boehmite include products having the trade designations "DISPERAL", and "DISPAL", both available from Sasol North America, Inc. of Houston, Texas, or "HiQ-40" available from BASF Corporation of Florham Park, New Jersey. These aluminum oxide monohydrates are relatively pure; that is, they include relatively little, if any, hydrate phases other than monohydrates, and have a high surface area.

The physical properties of the resulting shaped abrasive particles will generally depend upon the type of material used in the alpha alumina precursor dispersion. In one embodiment, the alpha alumina precursor dispersion is in a gel state. As used herein, a "gel" is a three-dimensional network of solids dispersed in a liquid.

The alpha alumina precursor dispersion may contain a modifying additive or precursor of a modifying additive. The modifying additive can function to enhance some desirable property of the abrasive particles or increase the effectiveness of the subsequent sintering step. Modifying additives or precursors of modifying additives can be in the form of soluble salts, typically water-soluble salts. They typically consist of a metal-containing compound and can be a precursor of oxide of magnesium, zinc, iron, silicon, cobalt, nickel, zirconium, hafnium, chromium, yttrium, praseodymium, samarium, ytterbium, neodymium, lanthanum, gadolinium, cerium, dysprosium, erbium, titanium, and mixtures thereof. The particular concentrations of these additives that can be present in the alpha alumina precursor dispersion can be varied based on skill in the art.

Typically, the introduction of a modifying additive or precursor of a modifying additive will cause the alpha alumina precursor dispersion to gel. The alpha alumina precursor dispersion can also be induced to gel by application of heat over a period of time. The alpha alumina precursor dispersion can also contain a nucleating agent (seeding) to enhance the transformation of hydrated or calcined aluminum oxide to alpha alumina. Nucleating agents suitable for this disclosure include fine particles of alpha alumina, alpha ferric oxide or its precursor, titanium oxides and titanates, chrome oxides, or any other material that will nucleate the transformation. The amount of nucleating agent, if used, should be sufficient to effect the transformation of alpha alumina. Nucleating such alpha alumina precursor dispersions is disclosed in U.S. Patent No. 4,744,802 (Schwabel).

A peptizing agent can be added to the alpha alumina precursor dispersion to produce a more stable hydrosol or colloidal alpha alumina precursor dispersion. Suitable peptizing agents are monoprotic acids or acid compounds such as acetic acid, hydrochloric acid, formic acid, and nitric acid. Multiprotic acids can also be used but they can rapidly gel the alpha alumina precursor dispersion, making it difficult to handle or to introduce additional components thereto. Some commercial sources of boehmite contain an acid titer (such as absorbed formic or nitric acid) that will assist in forming a stable alpha alumina precursor dispersion.

The alpha alumina precursor dispersion can be formed by any suitable means, such as, for example, by simply mixing aluminum oxide monohydrate with water containing a peptizing agent or by forming an aluminum oxide monohydrate slurry to which the peptizing agent is added.

Defoamers or other suitable chemicals can be added to reduce the tendency to form bubbles or entrain air while mixing. Additional chemicals such as wetting agents, alcohols, or coupling agents can be added if desired. The alpha alumina abrasive particles may contain silica and iron oxide as disclosed in U.S. Patent No. 5,645,619 (Erickson et al.). The alpha alumina abrasive particles may contain zirconia as disclosed in U.S. Patent No. 5,551,963 (Larmie). Alternatively, the alpha alumina abrasive particles can have a microstructure or additives as disclosed in U.S. Patent No. 6,277,161 (Castro).

The second process step involves providing a mold having at least one mold cavity, and preferably a plurality of cavities. The mold can have a generally planar bottom surface and a plurality of mold cavities. The plurality of cavities can be formed in a production tool. The production tool can be a belt, a sheet, a continuous web, a coating roll such as a rotogravure roll, a sleeve mounted on a coating roll, or die. In one embodiment, the production tool comprises polymeric material. Examples of suitable polymeric materials include thermoplastics such as polyesters, polycarbonates, poly(ether sulfone), poly(methyl methacrylate), polyurethanes, polyvinylchloride, polyolefin, polystyrene, polypropylene, polyethylene or combinations thereof, or thermosetting materials. In one embodiment, the entire tooling is made from a polymeric or thermoplastic material. In another embodiment, the surfaces of the tooling in contact with the sol-gel while drying, such as the surfaces of the plurality of cavities, comprises polymeric or thermoplastic materials and other portions of the tooling can be made from other materials. A suitable polymeric coating may be applied to a metal tooling to change its surface tension properties by way of example.

A polymeric or thermoplastic tool can be replicated off a metal master tool. The master tool will have the inverse pattern desired for the production tool. The master tool can be made in the same manner as the production tool. In one embodiment, the master tool is made out of metal, e.g., nickel and is diamond turned. The polymeric sheet material can be heated along with the master tool such that the polymeric material is embossed with the master tool pattern by pressing the two together. A polymeric or thermoplastic material can also be extruded or cast onto the master tool and then pressed. The thermoplastic material is cooled to solidify and produce the production tool. If a thermoplastic production tool is utilized, then care should be taken not to generate excessive heat that may distort the thermoplastic production tool limiting its life. More information concerning the design and fabrication of production tooling or master tools can be found in U.S. Patent Nos. 5,152,917 (Pieper et al.); 5,435,816 (Spurgeon et al.); 5,672,097 (Hoopman et al.); 5,946,991 (Hoopman et al.); 5,975,987 (Hoopman et al.); and 6,129,540 (Hoopman et al.).

Access to cavities can be from an opening in the top surface or bottom surface of the mold. In some instances, the cavities can extend for the entire thickness of the mold. Alternatively, the cavities can extend only for a portion of the thickness of the mold. In one embodiment, the top surface is substantially parallel to bottom surface of the mold with the cavities having a substantially uniform depth. At least one side of the mold, that is, the side in which the cavities are formed, can remain exposed to the surrounding atmosphere during the step in which the volatile component is removed.

The cavities have a specified three-dimensional shape to make the ceramic shaped abrasive particles. The depth dimension is equal to the perpendicular distance from the top surface to the lowermost point on the bottom surface. The depth of a given cavity can be uniform or can vary along its length and/or width. The cavities of a given mold can be of the same shape or of different shapes.

The third process step involves filling the cavities in the mold with the alpha alumina precursor dispersion (e.g., by a conventional technique). In some embodiments, a knife roll coater or vacuum slot die coater can be used. A mold release can be used to aid in removing the particles from the mold if desired. Typical mold release agents include oils such as peanut oil or mineral oil, fish oil, silicones, polytetrafluoroethylene, zinc stearate, and graphite. In general, mold release agent diluted in a liquid, such as water or alcohol, may be applied to the surfaces of the production tooling in contact with the sol-gel. Alternatively, a process such as that described in U. S. Pat. No. 9,790,410 (Boden et al.) may be used.

In some embodiments, the top surface of the mold is coated with the alpha alumina precursor dispersion. The alpha alumina precursor dispersion can be pumped onto the top surface.

Next, a scraper or leveler bar can be used to force the alpha alumina precursor dispersion fully into the cavity of the mold. The remaining portion of the alpha alumina precursor dispersion that does not enter cavity can be removed from top surface of the mold and recycled. In some embodiments, a small portion of the alpha alumina precursor dispersion can remain on the top surface and in other embodiments the top surface is substantially free of the dispersion. The pressure applied by the scraper or leveler bar is typically less than 100 psi (0.7 MPa), less than 50 psi (0.3 MPa), or even less than 10 psi (69 kPa). In some embodiments, no exposed surface of the alpha alumina precursor dispersion extends substantially beyond the top surface to ensure uniformity in thickness of the resulting ceramic shaped abrasive particles.

The fourth process step involves removing the volatile component to dry the dispersion. Desirably, the volatile component is removed by fast evaporation rates. In some embodiments, removal of the volatile component by evaporation occurs at temperatures above the boiling point of the volatile component. An upper limit to the drying temperature often depends on the material the mold is made from. For polypropylene tooling the temperature should be less than the melting point of the plastic. In one embodiment, for a water dispersion of between about 40 to 50 percent solids and a polypropylene mold, the drying temperatures can be between about 90°C to about 165°C, or between about 105°C to about 150°C, or between about 105°C to about 120°C. Higher temperatures can lead to improved production speeds but can also lead to degradation of the polypropylene tooling limiting its useful life as a mold.

The fifth process step involves removing resultant precursor ceramic shaped abrasive particles with from the mold cavities. The precursor ceramic shaped abrasive particles can be removed from the cavities by using the following processes alone or in combination on the mold: gravity, vibration, ultrasonic vibration, vacuum, or pressurized air to remove the particles from the mold cavities.

The precursor abrasive particles can be further dried outside of the mold. If the alpha alumina precursor dispersion is dried to the desired level in the mold, this additional drying step is not necessary. However, in some instances it may be economical to employ this additional drying step to minimize the time that the alpha alumina precursor dispersion resides in the mold. Typically, the precursor ceramic shaped abrasive particles will be dried from 10 to 480 minutes, or from 120 to 400 minutes, at a temperature from 50°C to 160°C, or at 120°C to 150°C.

The sixth process step involves calcining the precursor ceramic shaped abrasive particles. During calcining, essentially all the volatile material is removed, and the various components that were present in the alpha alumina precursor dispersion are transformed into metal oxides. The precursor ceramic shaped abrasive particles are generally heated to a temperature from 400°C to 800°C and maintained within this temperature range until the free water and over 90 percent by weight of any bound volatile material are removed. In an optional step, it may be desired to introduce the modifying additive by an impregnation process. A water-soluble salt can be introduced by impregnation into the pores of the calcined, precursor ceramic shaped abrasive particles. Then the precursor ceramic shaped abrasive particles are pre-fired again. This option is further described in U.S. Patent No. 5,164,348 (Wood).

The seventh process step involves sintering the calcined, precursor ceramic shaped abrasive particles to form alpha alumina particles. Prior to sintering, the calcined, precursor ceramic shaped abrasive particles are not completely densified and thus lack the desired hardness to be used as ceramic shaped abrasive particles. Sintering takes place by heating the calcined, precursor ceramic shaped abrasive particles to a temperature of from 1,000°C to 1,650°C and maintaining them within this temperature range until substantially all of the alpha alumina monohydrate (or equivalent) is converted to alpha alumina and the porosity is reduced to less than 15 percent by volume. The length of time to which the calcined, precursor ceramic shaped abrasive particles must be exposed to the sintering temperature to achieve this level of conversion depends upon various factors but usually from five seconds to 48 hours is typical.

In another embodiment, the duration for the sintering step ranges from one minute to 90 minutes. After sintering, the ceramic shaped abrasive particles can have a Vickers hardness of 10 GPa, 16 GPa, 18 GPa, 20 GPa, or greater.

Other steps can be used to modify the described process such as, for example, rapidly heating the material from the calcining temperature to the sintering temperature, centrifuging the alpha alumina precursor dispersion to remove sludge and/or waste. Moreover, the process can be modified by combining two or more of the process steps if desired. Conventional process steps that can be used to modify the process of this disclosure are more fully described in U.S. Patent No. 4,314,827 (Leitheiser).

More information concerning shaped abrasive particles and methods to make them is disclosed in U. S. Pat. Nos. 8,123,828 (Culler et al.); 8,034,137 (Erickson et al.); 8,142,532 (Erickson et al.); 8,764,865 (Boden et al.); and 9,771,504 (Adefris).

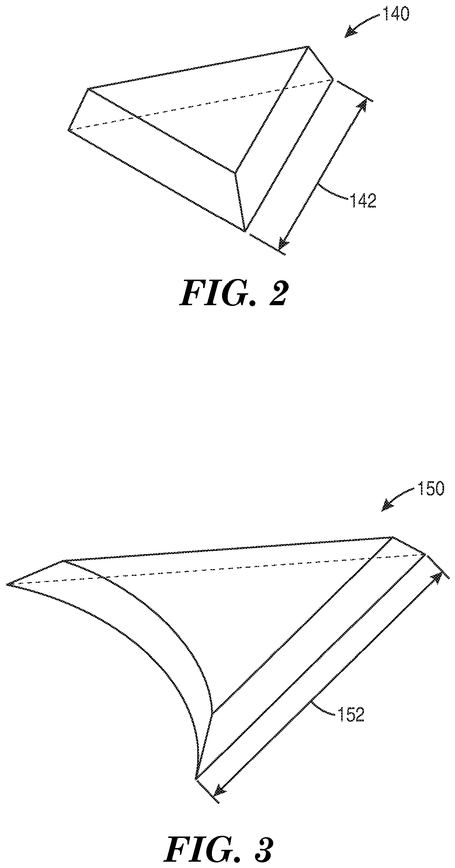

In some preferred embodiments of the present disclosure a combination of two sizes of shaped abrasive particles are used. In those embodiments, the shaped abrasive particles comprise first triangular platelets and second triangular platelets. As used herein the term "shaped abrasive particle" excludes crushed abrasive particles. Also, the term "triangular abrasive platelet" refers to an abrasive platelet that has a perimeter with three sides, which sides may be straight and/or inwardly curved (e.g., as shown in FIGS. 3 and 4). Similarly, the first and/or second triangular platelets may have non-sloping sidewalls (e.g., triangular prisms) or sloping sidewalls (e.g., truncated triangular pyramids). Triangular abrasive platelets may have openings extending therethrough that connect opposed major faces of the platelet, as long as the perimeter of the platelet is triangular in shape.

The first and second triangular platelets may have any suitable size and triangular shape. Of, course they must not be of such large dimensions that they do not physically fit within the overall cut-off wheel dimensions. In some embodiments, the first triangular platelets have a first average maximum side length of 0.2 to 1.4 millimeters (mm), in some embodiments, 0.4 to 1.2 mm, preferably 0.65 to 0.85 mm. In some embodiments, the second triangular platelets have a second average maximum side length of 0.1 to 0.7 mm, in some embodiments 0.2 to 0.6 mm, preferably 0.28 to 0.53 mm. The ratio of first average maximum side length to the second average maximum side length is 1.25:1 to 5:1 (preferably 1.25:1 to 2:1), and wherein the ratio of first total weight to the second total weight 1:2 to 7:1 (e.g., 1:1 to 7:1, 2:1 to 7:1, or 2:1 to 4:1). As used herein, the term "maximum side length" refers to the shortest point to point distance between endpoints of the side of having maximum length. If desired, the shaped abrasive particles may further include abrasive triangular platelets that have smaller average maximum side lengths than the first and second triangular abrasive platelets.

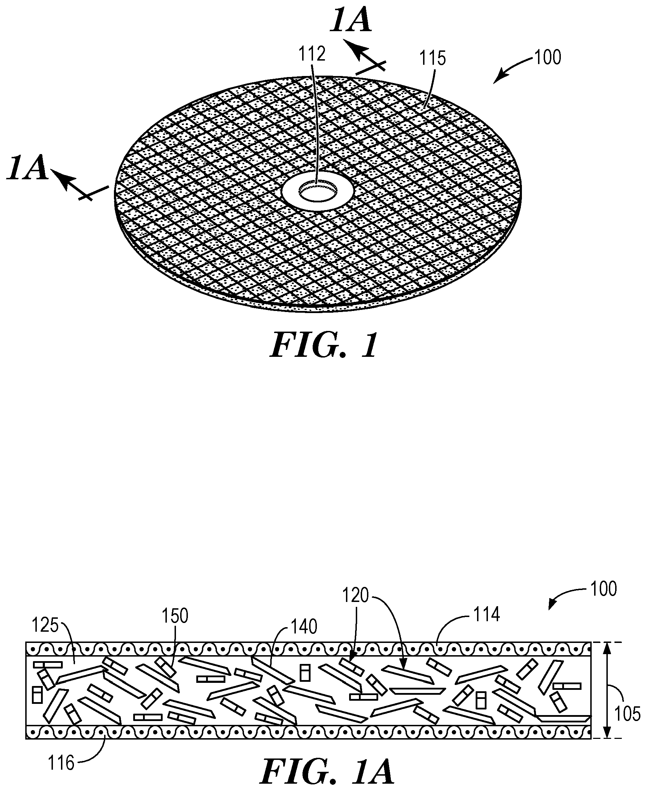

Referring now to FIG. 1, exemplary abrasive cut-off wheel 100 according to one embodiment of the present disclosure includes a bonded abrasive disc 115 and optional center hub 112 used for attaching cut-off wheel 100 to, for example, a power-driven tool.

FIG. 1A is a cross-section of cut-off wheel 100 of FIG. 1 taken along line 1A-1A, showing shaped abrasive particles 120 comprising first and second triangular platelets (140, 150), and phenolic binder material 125. Cut-off wheel 100 has optional first scrim 114 and optional second scrim 116, which are disposed on opposed major surfaces of cut-off wheel 100. Abrasive cut-off wheel 100 has thickness 105 of less than or equal to 1.6 millimeters.

FIGS 2 and 3 show illustrative possible shapes of first and second triangular platelets 140 and 150. Referring to FIG. 2, first triangular platelet 140 has a length 142. Referring to FIG. 3, second triangular platelet 150 has a length 152.

As used herein, in referring to shaped abrasive particles, the term "length" refers to the maximum dimension of the shaped abrasive particle. "Width" refers to the maximum dimension of the shaped abrasive particle that is perpendicular to the length. "Thickness" or "height" refer to the dimension of the shaped abrasive particle that is perpendicular to the length and width.

In some embodiments, the ceramic shaped abrasive particles may have an aspect ratio (length to thickness) of at least 2, 3, 4, 5, 6, or more.

Surface coatings on the shaped abrasive particles may be used to improve the adhesion between the shaped abrasive particles and the phenolic binder. In one embodiment, surface coatings as described in U.S. Patent No. 5,352,254 (Celikkaya) in an amount of 0.1 to 2 percent surface coating to shaped abrasive particle weight may be used. Such surface coatings are described in U.S. Patent Nos. 5,213,591 (Celikkaya et al.); 5,011,508 (Wald et al.); 1,910,444 (Nicholson); 3,041,156 (Rowse et al.); 5,009,675 (Kunz et al.); 5,085,671 (Martin et al.); 4,997,461 (Markhoff-Matheny et al.); 5,042,991 (Kunz et al.); and 10,702,974 (Schillo-Armstrong et al.), as well as PCT Publ. No. WO 2020/128783 (Beiermann et al.) and U. S. Pat. Appln. Publ. No. 2018/0236637 (Schillo-Armstrong et al.). Additionally, the surface coating may prevent the shaped abrasive particle from capping. Capping is the term to describe the phenomenon where metal particles from the workpiece being abraded become welded to the tops of the ceramic shaped abrasive particles. Surface coatings to perform the above functions are known to those of skill in the art.

The abrasive wheel may further comprise crushed abrasive particles (i.e., abrasive particles not resulting from breakage of the ceramic shaped abrasive particles and corresponding to an abrasive industry specified nominal graded or combination thereof) in addition to the shaped abrasive particles. The crushed abrasive particles are typically of a finer size grade or grades (e.g., if a plurality of size grades are used) than the shaped abrasive particles, although this is not a requirement.

Useful crushed abrasive particles include, for example, crushed particles of fused aluminum oxide, heat treated aluminum oxide, white fused aluminum oxide, ceramic aluminum oxide materials such as those commercially available under the trade designation 3M CERAMIC ABRASIVE GRAIN from 3M Company of St. Paul, Minnesota, black silicon carbide, green silicon carbide, titanium diboride, boron carbide, tungsten carbide, titanium carbide, diamond, cubic boron nitride, garnet, fused alumina zirconia, sol-gel derived abrasive particles, iron oxide, chromia, ceria, zirconia, titania, silicates, tin oxide, silica (such as quartz, glass beads, glass bubbles and glass fibers) silicates (such as talc, clays (e.g., montmorillonite), feldspar, mica, calcium silicate, calcium metasilicate, sodium aluminosilicate, sodium silicate), flint, and emery. Examples of sol-gel derived abrasive particles can be found in U.S. Patent Nos. 4,314,827 (Leitheiser et al.), 4,623,364 (Cottringer et al.); 4,744,802 (Schwabel), 4,770,671 (Monroe et al.); and 4,881,951 (Monroe et al.). It is also contemplated that the abrasive particles could comprise abrasive agglomerates such, for example, as those described in U.S. Patent Nos. 4,652,275 (Bloecher et al.) or 4,799,939 (Bloecher et al.).

Typically, conventional crushed abrasive particles are independently sized according to an abrasives industry recognized specified nominal grade. Exemplary abrasive industry recognized grading standards include those promulgated by ANSI (American National Standards Institute), FEPA (Federation of European Producers of Abrasives), and JIS (Japanese Industrial Standard). Such industry accepted grading standards include, for example: ANSI 4, ANSI 6, ANSI 8, ANSI 16, ANSI 24, ANSI 30, ANSI 36, ANSI 40, ANSI 50, ANSI 60, ANSI 80, ANSI 100, ANSI 120, ANSI 150, ANSI 180, ANSI 220, ANSI 240, ANSI 280, ANSI 320, ANSI 360, ANSI 400, and ANSI 600; FEPA P8, FEPA P12, FEPA P16, FEPA P24, FEPA P30, FEPA P36, FEPA P40, FEPA P50, FEPA P60, FEPA P80, FEPA P100, FEPA P120, FEPA P150, FEPA P180, FEPA P220, FEPA P320, FEPA P400, FEPA P500, FEPA P600, FEPA P800, FEPA P1000, FEPA P1200; FEPA F8, FEPA F12, FEPA F16, and FEPA F24;.and JIS 8, JIS 12, JIS 16, JIS 24, JIS 36, JIS 46, JIS 54, JIS 60, JIS 80, JIS 100, JIS 150, JIS 180, JIS 220, JIS 240, JIS 280, JIS 320, JIS 360, JIS 400, JIS 400, JIS 600, JIS 800, JIS 1000, JIS 1500, JIS 2500, JIS 4000, JIS 6000, JIS 8000, and JIS 10,000. More typically, the crushed aluminum oxide particles and the non-seeded sol-gel derived alumina-based abrasive particles are independently sized to ANSI 60 and 80, or FEPA F36, F46, F54 and F60 or FEPA P60 and P80 grading standards.

Alternatively, ceramic shaped abrasive particles can be graded to a nominal screened grade using U.S.A. Standard Test Sieves conforming to ASTM E-11 "Standard Specification for Wire Cloth and Sieves for Testing Purposes". ASTM E-11 prescribes the requirements for the design and construction of testing sieves using a medium of woven wire cloth mounted in a frame for the classification of materials according to a designated particle size. A typical designation may be represented as -18+20 meaning that the ceramic shaped abrasive particles pass through a test sieve meeting ASTM E-11 specifications for the number 18 sieve and are retained on a test sieve meeting ASTM E-11 specifications for the number 20 sieve. In one embodiment, the ceramic shaped abrasive particles have a particle size such that most of the particles pass through an 18 mesh test sieve and can be retained on a 20, 25, 30, 35, 40, 45, or 50 mesh test sieve. In various embodiments, the ceramic shaped abrasive particles can have a nominal screened grade comprising: -18+20, -20/+25, -25+30, -30+35, -35+40, -40+45, -45+50, -50+60, -60+70, -70/+80, -80+100, -100+120, -120+140, -140+170, -170+200, -200+230, -230+270, -270+325, -325+400, - 400+450, -450+500, or -500+635. Alternatively, a custom mesh size could be used such as -90+100.

The abrasive particles (shaped and/or crushed) may be uniformly or non-uniformly distributed throughout the bonded abrasive article. For example, the abrasive particles may be concentrated toward the periphery of the cut-off wheel. A depressed-center portion of a Type 27 or T42 cut-off wheel may likewise contain a lesser amount of abrasive particles. In another variation, first abrasive particles may be in one side of the wheel with different abrasive particles on the opposite side. However, typically all the abrasive particles are homogenously distributed among each other, because the manufacture of the wheels is easier, and the cutting effect is often optimized when multiple types of abrasive particles are closely positioned to each other.

In some embodiments, abrasive wheels according to the present disclosure contain grinding aids such as, for example, polytetrafluoroethylene particles, cryolite, sodium chloride, FeS₂ (iron disulfide), or KBF₄; typically in amounts of from 1 to 25 percent by weight, more typically 10 to 20 percent by weight, subject to weight range requirements of the other constituents being met. Grinding aids are added to improve the cutting characteristics of the cut-off wheel, generally by reducing the temperature of the cutting interface. The grinding aid may be in the form of single particles or an agglomerate of grinding aid particles. Examples of precisely shaped grinding aid particles are taught in U.S. Patent Publ. No. 2002/0026752 A1 (Culler et al.).

In some embodiments, the binder material contains plasticizer such as, for example, that available as SANTICIZER 154 PLASTICIZER from UNIVAR USA, Inc. of Chicago, Illinois.

Abrasive cut-off wheels according to the present disclosure may contain additional components such as, for example, filler particles, subject to weight range requirements of the other constituents being met. Filler particles may be added to occupy space and/or provide porosity. Porosity enables the bonded abrasive wheel to shed used or worn abrasive particles to expose new or fresh abrasive particles.

Cut-off wheels can be used on any right-angle grinding tool such as, for example, those available from Ingersoll-Rand, Sioux, Milwaukee, and Dotco. The tool can be electrically or pneumatically driven, generally at speeds from about 1000 to 50000 revolutions per minute (RPM).

During use, the bonded abrasive wheel can be used dry or wet. During wet grinding, the wheel is used in conjunction with water, oil-based lubricants, or water-based lubricants. Bonded abrasive wheels according to the present disclosure may be particularly useful on various workpiece materials such as, for example, carbon steel sheet or bar stock and more exotic metals (e.g., stainless steel or titanium), or on softer more ferrous metals (e.g., mild steel, low alloy steels, or cast irons).

### SELECT EMBODIMENTS OF THE PRESENT DISCLOSURE

In a first embodiment, the present disclosure provides an abrasive cut-off wheel having a thickness of less than or equal to 1.6 millimeters, wherein the abrasive cut-off wheel comprises at least one reinforcing scrim and abrasive particles retained in a phenolic binder, wherein the abrasive particles comprise first and second triangular abrasive platelets, wherein the first triangular platelets have a first average maximum side length and a first total weight, wherein the second triangular platelets have a second average maximum side length and a second total weight, wherein the first and second total weights combined comprise at least 30 weight percent of the abrasive cut-off wheel, wherein the ratio of the first average maximum side length to the second average maximum side length is 1.25:1 to 5:1, and wherein the ratio of first total weight to the second total weight is 1:2 to 5:1.

In a second embodiment, the present disclosure provides an abrasive cut-off wheel according to the first embodiment, wherein the first triangular platelets comprise first truncated triangular pyramids.

In a third embodiment, the present disclosure provides an abrasive cut-off wheel according to the first or second embodiment, wherein the second triangular platelets comprise second truncated triangular pyramids.

In a fourth embodiment, the present disclosure provides an abrasive cut-off wheel according to any of the first to third embodiments, wherein the first triangular platelets and the second triangular platelets comprise alpha alumina.

In a fifth embodiment, the present disclosure provides a method of making an abrasive cut-off wheel, the method comprising:
placing a mixture comprising shaped abrasive particles, curable phenolic resin, and at least one reinforcing scrim into a mold;
at least partially curing the curable phenolic resin; and
removing the abrasive cut-off wheel from the mold, wherein the abrasive cut-off wheel has a thickness of less than or equal to 1.6 millimeters, wherein the abrasive cut-off wheel comprises the at least one reinforcing scrim and the shaped abrasive particles retained in a phenolic binder, wherein the shaped abrasive particles comprise first and second triangular abrasive platelets, wherein the first triangular platelets have a first average maximum side length and a first total weight, wherein the second triangular platelets have a second average maximum side length and a second total weight, wherein the first and second total weights combined comprise at least 30 weight percent of the abrasive cut-off wheel, wherein the ratio of first average maximum side length to the second average maximum side length is 1.25:1 to 5:1, and wherein the ratio of first total weight to the second total weight 1:2 to 5:1.

In a sixth embodiment, the present disclosure provides a method according to the fifth embodiment, wherein the first triangular platelets comprise first truncated triangular pyramids.

In a seventh embodiment, the present disclosure provides a method according to the fifth or sixth embodiment, wherein the second triangular platelets comprise second truncated triangular pyramids.

In an eighth embodiment, the present disclosure provides a method according to any of the fifth to seventh embodiments, wherein the first triangular platelets and the second triangular platelets comprise alpha alumina.

In a ninth embodiment, the present disclosure provides a method according to any of the fifth to eighth embodiments, wherein a majority of the curable phenolic resin by mass has an inclined plate resin flow length of less than 30 mm according to test method ISO 8619:2003 (E).

In a tenth embodiment, the present disclosure provides a method of making an abrasive cut-off wheel, the method comprising:
placing a mixture comprising shaped abrasive particles, curable phenolic resin, and at least one reinforcing scrim into a mold, wherein a majority of the curable phenolic resin by mass has an inclined plate resin flow length of less than 30 mm according to test method ISO 8619:2003 (E);
at least partially curing the curable phenolic resin; and
removing the abrasive cut-off wheel from the mold, wherein the abrasive cut-off wheel has a thickness of less than or equal to 1.6 millimeters.

In an eleventh embodiment, the present disclosure provides a method according to the tenth embodiment, wherein the shaped abrasive particles comprise first and second triangular abrasive platelets, wherein the first triangular platelets have a first average maximum side length and a first total weight, wherein the second triangular platelets have a second average maximum side length and a second total weight, wherein the first and second total weights combined comprise at least 30 weight percent of the abrasive cut-off wheel, wherein the ratio of the first average maximum side length to the second average maximum side length is 1.25:1 to 5:1, and wherein the ratio of first total weight to the second total weight is 1:2 to 5:1.

In a twelfth embodiment, the present disclosure provides a method according to the tenth or eleventh embodiment, wherein the first triangular platelets comprise first truncated triangular pyramids.

In a thirteenth embodiment, the present disclosure provides a method according to any of the tenth to twelfth embodiments, wherein the second triangular platelets comprise second truncated triangular pyramids.

In a fourteenth embodiment, the present disclosure provides a method according to any of the tenth to thirteenth embodiments, wherein the first triangular platelets and the second triangular platelets comprise alpha alumina.

In a fifteenth embodiment, the present disclosure provides a method according to any of the tenth to fourteenth embodiments, wherein the mixture further comprises crushed abrasive particles.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples and the rest of the specification are by weight; and wt. % means weight percent. Table 1, below, reports materials used in the Examples.

**TABLE 1**

| ACRONYM | DESCRIPTION AND SOURCE | COMMENTS |
|---|---|---|
| CAT | Titanium (IV) 2-ethylhexanoate (CAS #3645-34-9) | Catalyst |
| CR40 | Crushed blue fired heat treated semi-friable aluminum oxide BFRPL 40 Grit from Imerys Fused Minerals, Villach Austria | Crushed abrasive particles |
| CR80 | Crushed blue fired heat treated semi-friable aluminum oxide BFRPL 80 Grit from Imerys Fused Minerals | Crushed abrasive particles |
| ESO | Epoxidized Soybean Oil (CAS#8013-07-8) obtained as Plasthall ESO from Hallstar, Chicago, Illinois | Adhesion promoter |
| PO | Paraffin oil, obtained from Sigma Aldrich | Additive |
| PP1 | A mixture of 38.5 wt. % of novolac phenolic resin (obtained as CHEMIPLASTICA 7198 from Bi-Qem RESINS AB - Resins Division, Perstorp, Sweden), 8.3 wt. % of ZWSK F400 Fused White Aluminum Oxide (obtained from Imerys Fused Minerals), 0.2 wt. % of carbon black (obtained as LUVOMAXXX LB/S from Lehmann & Voss & Co. KG, Hamburg, Germany), and 53.0 wt. % of PAF (potassium aluminum fluoride from KBM Affilips Master Alloys, Delfzijl, Netherlands) | Powder premix |
| PP2 | A mixture of 38.5 wt. wt. % of novolac phenolic resin (obtained as HEXION 0224P from Momentive Specialty Chemicals Columbus, Ohio), 8.3 wt. % of ZWSK F400 Fused White Aluminum Oxide (obtained from Imerys Fused Minerals), 0.2 wt. % of carbon black (obtained as LUVOMAXXX LB/S from Lehmann & Voss & Co. KG), and 53.0 wt. % of PAF (potassium aluminum fluoride from KBM Affilips Master Alloys) | Powder premix |
| PP3 | A mixture of 38.0 wt. % of novolac phenolic resin (obtained as HEXION 0224P from Momentive Specialty Chemicals, Columbus, Ohio), 8.6 wt. % of ZWSK F400 Fused White Aluminum Oxide (obtained from Imerys Fused Minerals), 0.2 wt. % of carbon black (obtained as LUVOMAXXX LB/S from Lehmann & Voss & Co. KG), and 53.4 wt. % of PAF (potassium aluminum fluoride from KBM Affilips Master Alloys) | Powder premix |
| PP4 | A mixture of 18.9 wt. % of novolac phenolic resin (obtained as HEXION 0224P from Momentive Specialty Chemicals Columbus, Ohio), 19.1 wt. % of novolac phenolic resin (obtained as Chemiplastica 7198 from Bi-Qem RESINS AB - Resins Division, Perstorp, Sweden), 8.6 wt. % of ZWSK F400 Fused White Aluminum Oxide (obtained from Imerys Fused Minerals), 0.2 wt. % of carbon black (obtained as LUVOMAXXX LB/S from Lehmann & Voss & Co. KG), and 53.4 wt. % of PAF (potassium aluminum fluoride from KBM Affilips Master Alloys) | Powder premix |
| PP5 | A mixture of 38.0 wt. % of novolac phenolic resin (obtained as Chemiplastica 7198 from Bi-Qem RESINS AB - Resins Division), 8.6 wt. % of ZWSK F400 Fused White Aluminum Oxide (obtained from Imerys Fused Minerals), 0.2 wt. % of carbon black (obtained as LUVOMAXXX LB/S from Lehmann & Voss & Co.), and 53.4 wt. % of PAF (potassium aluminum fluoride from KBM Affilips Master Alloys) | Powder premix |
| PP6 | A mixture of 38.0 wt. % of novolac phenolic resin (obtained as Prefere 82 8750G from Dynea Erkner GmbH, Erkner, Germany), 8.6 wt. % of ZWSK F400 Fused White Aluminum Oxide (obtained from Imerys Fused Minerals), 0.2 wt. % of carbon black (obtained as LUVOMAXXX LB/S from Lehmann & Voss & Co. KG Hamburg, Germany), and 53.4 wt. % of PAF (potassium aluminum fluoride from KBM Affilips Master Alloys) | Powder premix |
| RP | liquid phenolic resin obtained as PREFERE 92 5136G1 from Dynea Erkner GmbH, Erkner, Germany | Resole phenolic liquid resin |
| SAP40 | Alpha alumina abrasive particles shaped as truncated triangular pyramids with equal base side lengths of 833 microns, a height of 154.7 microns, and a sidewall inward taper angle of 8 degrees (i.e., the dihedral angle between any sidewall and the base is nominally 82 degrees) | Shaped abrasive particles |
| SAP60 | Alpha alumina abrasive particles shaped as truncated triangular pyramids with equal base side lengths of 664 microns, a height of 123.8 microns, and a sidewall inward taper angle of 8 degrees (i.e., the dihedral angle between any sidewall and the base is nominally 82 degrees) | Shaped abrasive particles |
| SAP80 | Alpha alumina abrasive particles shaped as truncated triangular pyramids with equal base side lengths of 512.1 microns, a height of 92.7 microns, and a sidewall inward taper angle of 8 degrees (i.e., the dihedral angle between any sidewall and the base is nominally 82 degrees) | Shaped abrasive particles |
| SAP120 | Alpha alumina abrasive particles shaped as truncated triangular pyramids with equal base side lengths of 294.4 microns, a height of 74.6 microns, and a sidewall inward taper angle of 8 degrees (i.e., the dihedral angle between any sidewall and the base is nominally 82 degrees) | Shaped abrasive particles |
| SCRIM1 | fiberglass mesh, obtained as "RXO 08-125 x 23mm" from Rymatex Sp. Zo.o., Rymanów, Poland | Scrim |
| SCRIM2 | fiberglass mesh scrim attached to a cloth mesh, obtained as" RXV 08-125 x 23mm" from Rymatex Sp. Zo.o. | Scrim |
| SIL | Bis[3-(triethoxysilyl)propyl]amine (CAS#13497-18-2), obtained as DYNASYLAN 1122 from Evonik Industries, Essen, Germany | Adhesion promoter |

### Preparation of Shaped Abrasive Particles

Shaped alpha alumina abrasive particles SAP60, SAP80 and SAP120 in the examples were prepared according to the disclosure of Example 1 of U. S. Pat. No. 8,142,531 (Adefris et al.) by molding alumina sol-gel in equilateral triangular polypropylene mold cavities. SAP40 was made similarly except that the impregnating solution consisted of 93.1 weight percent of Mg(NO₂)₃, 6.43 weight percent of deionized water, and 0.47 weight percent of Co(NO₃)₂. Further, SAP40, SAP60, SAP80 and SAP120 had a coating of fine (ca. 0.5 micron) particles of alumina (HYDRAL COAT 5, obtained from Almatis, Pittsburgh, Pennsylvania), this particle coating applied according to the teaching of U. S. Pat. No. 5,213,591 (Celikkaya, et al.).

### Cut-off Wheel Preparation Method

Abrasive particles are wetted with a liquid resole phenolic resin, followed by adding the wetted grain into a "premix bond". The premix bond contains powdered phenolic resins, grinding aid, and filler. Table 2 reports the amounts of premix bond components used in the examples. Exact compositions of the premix bond for each example are detailed in Table 1. After blending, the resultant mixture is pressed with glass-fiber scrims at a force of 50 to 55 tons into the shape of a cut-off wheel as described elsewhere. After pressing, the green wheels were stacked and cured for 30 hours at a maximum temperature of 190 °C.

**TABLE 2**

| Material | Percentage by Weight |
|---|---|
| Novolac Phenolic Resin | 38 |
| Active and Passive Fillers | 53.2 |
| Fine Grit Abrasive | 8.6 |
| Colorant | 0.2 |

### EXAMPLE 1

Adhesion promoter was prepared with ESO and SIL as detailed in the Adhesion Promoter AP1 synthesis of WO2017/062482 (Schillo-Armstrong et al). One part CAT per 100 parts was added to combined ESO and S and mixed thoroughly. The resulting solution is referred to as AP.

SAP60 (590 g) was coated with 1.77 g of AP in a KitchenAid Commercial mixer. The coating process was conducted in a stainless steel bowl where, by means of a pipette, the AP solution was added to the abrasive grain while the abrasive grain was continuously mixed. Mixing of the abrasive grain continued until a uniform coating was achieved. The abrasive particles were left to sit at room temperature for 15 minutes to allow the condensation reaction between the AP and the abrasive particle. The coated abrasive particles were SAP60-ES.

RP (60g) was added to SAP60-ES and was mixed in a KitchenAid Commercial mixer for 7 minutes. This mixture was then combined with 343 grams of PP1 in a KitchenAid Commercial mixer and mixed for 7 minutes. In the middle of the second mixing step, 5.5 mL PO was added to the mixture. The mix was left to sit for approximately 24 hours and then the resulting mix was sieved using 14-mesh screen to remove aggregates.

SCRIM2 was placed in the bottom of a 4.92-inch (125-mm) diameter x 1-inch (2.5-cm) deep metal mold cavity, cloth mesh side down. The mold had an inner diameter of 23-mm. The cut-off wheel fill mixture (20.5g) was then placed on top of SCRIM2and spread with a metal blade in a rotary motion. SCRIM1 was then placed on top of the fill mixture. A 70 mm diameter paper label was added on top of SCRIM1. A metal flange 32mm (OD) x 22.45 (ID) mm x 0.9 (height) mm bushing with 0.18 mm metal thickness from Omes SRL, CEPAGATTI, Italy, was placed on top of the label. The mold was closed, and the scrim-fill-scrim-label-bushing sandwich was pressed at a load of 55 tons (50000 kg) at room temperature for 3 seconds. The cut-off wheel precursor was then removed from the mold and cured in a stack for 30 hrs and using a maximum temp of 190°C. Three replicates of Example 1 were made for a total of four wheels.

### EXAMPLE 2

Example 1 was repeated except that the abrasive particles used in the wheel was SAP80.

### EXAMPLE 3

Example 1 was repeated except that the abrasive particles used in the wheel was SAP120 and the abrasive particles was coated with 1.95 g of the AP mixture.

### EXAMPLE 4

Example 2 was repeated except that the mixture amount placed in the mold was 21.5 g.

### EXAMPLE 5

Example 3 was repeated except that the mixture amount placed in the mold was 21.5 g.

### COMPARATIVE EXAMPLE A

Example 1 was repeated except that instead of 343 g of PP1, there was 274.4 g of PP1and 68.6 g of PP2.

### Pinhole Detection

Cured cut-off wheels were placed over a light box with black construction paper under the area where the wheel was not covering the light and a picture was taken and inspected for visible pinholes. The size of one pinhole was kept consistent for each set of samples. Final wheel thicknesses are reported in Table 3 along with abrasive particles size, premix bond, and number of pinholes.

**TABLE 3**

| EXAMPLE | ABRASIVE PARTICLES | PREMIX BOND | WHEEL THICKNESS, millimeters (mm) | NUMBER OF PINHOLES |
|---|---|---|---|---|
| 1 | SAP60 | PP1 | 1.01 | 55 |
| | | | 1.03 | 15 |
| | | | 1.02 | 75 |
| | | | 1.01 | 140 |
| 2 | SAP80 | PP1 | 0.94 | 10 |
| | | | 0.99 | 30 |
| | | | 1.03 | 27 |
| | | | 1.00 | 27 |
| 3 | SAP120 | PP1 | 1.07 | 2 |
| | | | 1.08 | 11 |
| | | | 1.07 | 3 |
| | | | 1.11 | 0 |
| 4 | SAP80 | PP1 | 1.04 | 33 |
| | | | 1.00 | 5 |
| | | | 1.00 | 55 |
| | | | 1.03 | 1 |
| 5 | SAP120 | PP1 | 0.99 | 2 |
| | | | 1.05 | 1 |
| | | | 1.07 | 0 |
| | | | 0.97 | 0 |
| Comp. Ex. A | SAP60 | 80 wt. % PP1, 20 wt. % PP2 | 1.11 | 191 |
| | | | 1.04 | 245 |
| | | | 1.11 | 180 |
| | | | 1.02 | 120 |

As shown in Table 3, as abrasive particles size decreased, the number of visible pinholes decreased. As abrasive particles size decreased, the abrasive particles and corresponding mix pack better allowing for more mass to be placed within a wheel of the same thickness. Examples 3 and 5 demonstrate that higher mix mass used in a wheel to achieve denser wheels also resulted in lower quantities of pinholes.

The use of PP1 in Example 1 decreased the number of pinholes compared to the 80/20 mixture of PP1/PP2 used in Comparative Example A. The comparison of novolac phenolic resins is examined in more depth in Examples 6 to 9.

Table 4, below, reports inclined plate resin flow length according to test method ISO 8619:2003 (E), as well as hexa content and particle size for several commercially available novolac phenolic resins.

**TABLE 4**

| NOVOLAC PHENOLIC RESIN | FLOW LENGTH, mm | HEXA CONTENT, wt.% | Particle Sieve Size, wt. % > 44 microns |
|---|---|---|---|
| Hexion Bakelite 0224SP from Momentive Specialty Chemicals Columbus, Ohio | 50 | 13.5 | 1% |
| Chemiplastica 7198 from Bi-Qem RESINS AB - Resins Division, Perstorp, Sweden | 17.5 | 13.5 | 5% |
| Dynea Prefere 82 8750G from Dynea Erkner GmbH, Erkner, Germany | 28 | 9 | - |

### EXAMPLE 6

SAP40 (201 g) and 409 g of SAP60 were combined and gently mixed. RP (60 g) was added to the abrasive particles and was mixed in a KitchenAid Commercial mixer for 7 minutes. This mixture was then combined with 325 grams of PP3 in a KitchenAid Commercial mixer and mixed for 7 minutes. In the middle of the second mixing step, 5.0mL PO was added to the mixture. The mix was left to sit for approximately 24 hours and then the resulting cut-off mix was sieved using 14-mesh screen to remove aggregates.

SCRIM2 was placed in the bottom of a 4.92-inch (125-mm) diameter x 1-inch (2.5-cm) deep metal mold cavity, cloth mesh side down. The mold had an inner diameter of 23-mm. The cut-off wheel fill mixture (27g) was then placed on top of SCRIM2 and spread with a metal blade in a rotary motion. SCRIM1 was then placed on top of the fill mixture. A 70 mm diameter paper label was added on top of SCRIM1. A metal flange 28 mm x 22.45 mm x 1.2 mm from Lumet PPUH, Jas 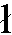 o, Poland was placed on top of the label. The mold was closed and the scrim-fill-scrim-label-bushing sandwich was pressed at a load of 50 tons (907 kg) at room temperature for 3 seconds. The cut-off wheel precursor was then removed from the mold and cured in a stack for 30 hrs and using a maximum temp of 190°C. Three replicates of Example 6 were made for a total of four wheels.

### EXAMPLE 7

Example 6 was repeated except that the premix bond used in the wheel was PP4.

### EXAMPLE 8

Example 6 was repeated except that the premix bond used in the wheel was PP5.

### EXAMPLE 9

Example 6 was repeated except that the premix bond used in the wheel was PP6.

Final wheel thicknesses are reported in Table 5 along with abrasive particles size, premix bond and number of pinholes.

**TABLE 5**

| EXAMPLE | ABRASIVE PARTICLES | PREMIX BOND | WHEEL THICKNESS, mm | NUMBER OF PINHOLES |
|---|---|---|---|---|
| 6 | SAP40 & SAP60 | PP3 | 1.30 | 23 |
| | | | 1.28 | 22 |
| | | | 1.29 | 22 |
| | | | 1.29 | 55 |
| 7 | SAP40 & SAP60 | PP4 | 1.32 | 28 |
| | | | 1.30 | 23 |
| | | | 1.27 | 20 |
| | | | 1.31 | 4 |
| 8 | SAP40 & SAP60 | PP5 | 1.26 | 3 |
| | | | 1.34 | 3 |
| | | | 1.37 | 2 |
| | | | 1.34 | 7 |
| 9 | SAP40 & SAP60 | PP6 | 1.26 | 12 |
| | | | 1.29 | 15 |
| | | | 1.25 | 30 |
| | | | 1.28 | 32 |

### COMPARATIVE EXAMPLE B

CR40 (610 g) was placed in a pan. RP (60g) was added to the abrasive particles and was mixed in a KitchenAid Commercial mixer for 7 minutes. This mixture was then combined with 320 grams of PP2 in a KitchenAid Commercial mixer and mixed for 7 minutes. In the middle of the second mixing step, 5.5mL PO was added to the mixture. The mix was left to sit for approximately 24 hours and then the resulting cut-off mix was sieved using 14-mesh screen to remove aggregates.

SCRIM2 was placed in the bottom of a 4.92-inch (125-mm) diameter x 1-inch (2.5-cm) deep metal mold cavity, cloth mesh side down. The mold had an inner diameter of 23-mm. The cut-off wheel fill mixture (27.5 g) was then placed on top of SCRIM2 and spread with a metal blade in a rotary motion. SCRIM1 was then placed on top of the fill mixture. A 70 mm diameter paper label was added on top of SCRIM1. A metal flange 28 mm x 22.45 mm x 1.2 mm from Lumet PPUH in Jaslo, Poland was placed on top of the label. The mold was closed and the scrim-fill-scrim-label-bushing sandwich was pressed at a load of 50 tons (907 kg) at room temperature for 3 seconds. The cut-off wheel precursor was then removed from the mold and cured in a stack for 30 hrs and using a maximum temp of 190°C. Four replicates of Comp. Ex. B were made for a total of five wheels.

### COMPARATIVE EXAMPLE C

Comparative Example B was repeated except that the abrasive particles used in the wheel were CR80.

### COMPARATIVE EXAMPLE D

Comparative Example B was repeated except that the abrasive particles used in the wheel were SAP40.

### COMPARATIVE EXAMPLE E

Comparative Example B was repeated except that the abrasive particles used in the wheel were SAP80.

### EXAMPLE 10

Comparative Example B was repeated except that the abrasive particles used in the wheel were 402.6 g SAP40 and 207.4 g SAP80. The abrasive particles were combined and gently mixed prior to addition of RP.

### EXAMPLE 11

Comparative Example B was repeated except that the abrasive particles used in the wheel were 207.4 g SAP40 and 402.6 g SAP80. The abrasive particles were combined and gently mixed prior to addition of RP.

### EXAMPLE 12

Comparative Example B was repeated except that the abrasive particles used in the wheel were 207.4 g SAP40 and 201.3 g SAP80 and 201.3 g SAP120. The abrasive particles were combined and gently mixed prior to addition of RP.

Final wheel thicknesses are reported in Table 6 along with abrasive particles size, premix bond and number of pinholes.

**TABLE 6**

| EXAMPLE | ABRASIVE PARTICLES | PREMIX BOND | WHEEL THICKNESS, mm | NUMBER OF PINHOLES |
|---|---|---|---|---|
| Comp. Ex. B | CR40 | PP2 | 1.29 | 76 |
| | | | 1.27 | 35 |
| | | | 1.30 | 21 |
| | | | 1.30 | 38 |
| | | | 1.31 | 24 |
| | | | 1.30 | 27 |
| Comp. Ex. C | CR80 | PP2 | 1.28 | 0 |
| | | | 1.29 | 0 |
| | | | 1.29 | 0 |
| | | | 1.33 | 0 |
| | | | 1.29 | 0 |
| | | | 1.28 | 0 |
| Comp. Ex. D | SAP40 | PP2 | 1.40 | 88 |
| | | | 1.37 | 164 |
| | | | 1.38 | 75 |
| | | | 1.29 | 58 |
| | | | 1.34 | 76 |
| | | | 1.29 | 139 |
| Comp. Ex. E | SAP80 | PP2 | 1.29 | 0 |
| | | | 1.32 | 1 |
| | | | 1.32 | 0 |
| | | | 1.31 | 0 |
| | | | 1.32 | 0 |
| | | | 1.31 | 8 |
| 10 | 2:1 SAP40 & SAP80 | PP2 | 1.35 | 40 |
| | | | 1.33 | 42 |
| | | | 1.32 | 54 |
| | | | 1.32 | 16 |
| | | | 1.34 | 59 |
| | | | 1.34 | 16 |
| 11 | 1:2 SAP40 & SAP80 | PP2 | 1.33 | 12 |
| | | | 1.32 | 4 |
| | | | 1.31 | 21 |
| | | | 1.31 | 3 |
| | | | 1.31 | 5 |
| | | | 1.30 | 11 |
| 12 | 1:1:1 SAP40, SAP80 and SAP120 | PP2 | 1.31 | 1 |
| | | | 1.32 | 0 |
| | | | 1.30 | 1 |
| | | | 1.30 | 3 |
| | | | 1.27 | 4 |
| | | | 1.29 | 5 |

As abrasive particles size decreased, the number of pinholes decreases. As abrasive particles size decreased, the abrasive particles and corresponding mix packed better allowing for more mass to be placed within a wheel of the same thickness.

Comparison of Comparative Example B to Comparative Example D as well as Comparative Example C to Comparative Example E demonstrates that pinholes are more prevalent when utilizing shaped abrasive grains as opposed to crushed abrasive grains of the same grit size.

It may be desirable to either utilize smaller size shaped abrasive grits to fit into a corresponding wheel thickness or to use combinations of various sized shaped abrasive grits to allow for best cut and wear properties and better particle packing.

In some embodiments, it is preferred to use a combination of grain sizes to avoid significant pinhole density while still maintaining optimal cut off wheel lifetime and cut rate. Examples 10-12 highlight the impact of particle size, particle size ratios and the impact on pinhole density.

The preceding description, given in order to enable one of ordinary skill in the art to practice the claimed disclosure, is not to be construed as limiting the scope of the disclosure, which is defined by the claims.

## Claims

1. An abrasive cut-off wheel (100) having a thickness of less than or equal to 1.6 millimeters, wherein the abrasive cut-off wheel (100) comprises at least one reinforcing scrim (114, 116) and abrasive particles (140, 150) retained in a phenolic binder (125) obtained from a curable phenolic resin, wherein the abrasive particles (140, 150) comprise first and second triangular abrasive platelets , wherein the first triangular platelets (140) have a first average maximum side length and a first total weight, wherein the second triangular platelets (150) have a second average maximum side length and a second total weight, wherein the first and second total weights combined comprise at least 30 weight percent of the abrasive cut-off wheel (100), wherein the ratio of the first average maximum side length to the second average maximum side length is 1.25:1 to 5:1, and wherein the ratio of first total weight to the second total weight is 1:2 to 5:1, and wherein a majority of the curable phenolic resin by mass has an inclined plate resin flow length of less than 30 mm according to test method ISO 8619:2003 (E).

2. The abrasive cut-off wheel of claim 1, wherein the first triangular platelets comprise first truncated triangular pyramids.

3. The abrasive cut-off wheel of claim 1 or 2, wherein the second triangular platelets comprise second truncated triangular pyramids.

4. The abrasive cut-off wheel of any of claims 1 to 3, wherein the first triangular platelets and the second triangular platelets comprise alpha alumina.

5. The abrasive cut-off wheel of any of claims 1 to 4, wherein the second triangular platelets have a size of equal base side lengths of 512.1 µm and height of 92.7 µm, or less.

6. The abrasive cut-off wheel of any of claims 1 to 5, further comprising crushed abrasive particles of finer size grades than the first and second triangular platelets.

7. The abrasive cut-off wheel of any of claims 1 to 6, wherein the curable phenolic resin comprises a majority of powdered novolac phenolic resin by mass having an inclined plate resin flow length of less than 30 mm according to test method ISO 8619:2003 (E), and a resole phenolic liquid resin.

8. A method of making an abrasive cut-off wheel (100), the method comprising:placing a mixture comprising shaped abrasive particles (140, 150), curable phenolic resin, and at least one reinforcing scrim (114, 115) into a mold; at least partially curing the curable phenolic resin; and removing the abrasive cut-off wheel (100) from the mold, wherein the abrasive cut-off wheel (100) has a thickness of less than or equal to 1.6 millimeters, wherein the abrasive cut-off wheel (100) comprises the at least one reinforcing scrim (114, 115) and the shaped abrasive particles (140, 150) retained in a phenolic binder (125), wherein the shaped abrasive particles (140, 150) comprise first and second triangular abrasive platelets (140, 150), wherein the first triangular platelets (140) have a first average maximum side length and a first total weight, wherein the second triangular platelets (150) have a second average maximum side length and a second total weight, wherein the first and second total weights combined comprise at least 30 weight percent of the abrasive cut-off wheel (100), wherein the ratio of first average maximum side length to the second average maximum side length is 1.25:1 to 5:1, and wherein the ratio of first total weight to the second total weight 1:2 to 5:1, and wherein a majority of the curable phenolic resin by mass has an inclined plate resin flow length of less than 30 mm according to test method ISO 8619:2003 (E).

9. The method of claim 8, wherein the first triangular platelets comprise first truncated triangular pyramids.

10. The method of claim 8 or 9, wherein the second triangular platelets comprise second truncated triangular pyramids.

11. The method of any of claims 8 to 10, wherein the first triangular platelets and the second triangular platelets comprise alpha alumina.

12. The method of any of claims 8 to 11, wherein the second triangular platelets have a size of equal base side lengths of 512.1 µm and height of 92.7 µm, or less.

13. The method of any of claims 8 to 12, further comprising crushed abrasive particles of finer size grades than the first and second triangular platelets.

14. The method of any of claims 8 to 13, wherein the curable phenolic resin comprises a majority of powdered novolac phenolic resin by mass having an inclined plate resin flow length of less than 30 mm according to test method ISO 8619:2003 (E), and a resole phenolic liquid resin.

## Patentansprüche

1. Eine Trennschleifscheibe (100), die eine Dicke von weniger als oder gleich 1,6 Millimeter hat, wobei die Trennschleifscheibe (100) mindestens ein Verstärkungsgewebe (114, 116) und Schleifteilchen (140, 150) aufweist, die in einem Phenolbindemittel (125) gehalten werden, das aus einem härtbaren Phenolharz erhalten wird, wobei die Schleifteilchen (140, 150) erste und zweite dreieckige Schleifplättchen aufweisen, wobei die ersten dreieckigen Plättchen (140) eine erste durchschnittliche maximale Seitenlänge und ein erstes Gesamtgewicht haben, wobei die zweiten dreieckigen Plättchen (150) eine zweite durchschnittliche maximale Seitenlänge und ein zweites Gesamtgewicht haben, wobei das erste und das zweite Gesamtgewicht in Kombination mindestens 30 Gewichtsprozent der Trennschleifscheibe (100) ausmachen, wobei das Verhältnis der ersten durchschnittlichen maximalen Seitenlänge zu der zweiten durchschnittlichen maximalen Seitenlänge 1,25 : 1 bis 5 : 1 beträgt und wobei das Verhältnis des ersten Gesamtgewichts zu dem zweiten Gesamtgewicht 1 : 2 bis 5 : 1 beträgt und wobei ein Massengroßteil des härtbaren Phenolharzes eine Harzfließlänge auf schiefer Ebene von weniger als 30 mm gemäß Prüfverfahren ISO 8619:2003 (E) hat.

2. Die Trennschleifscheibe nach Anspruch 1, wobei die ersten dreieckigen Plättchen erste dreieckige Pyramidenstümpfe aufweisen.

3. Die Trennschleifscheibe nach Anspruch 1 oder 2, wobei die zweiten dreieckigen Plättchen zweite dreieckige Pyramidenstümpfe aufweisen.

4. Die Trennschleifscheibe nach einem der Ansprüche 1 bis 3, wobei die ersten dreieckigen Plättchen und die zweiten dreieckigen Plättchen Alpha-Aluminiumoxid aufweisen.

5. Die Trennschleifscheibe nach einem der Ansprüche 1 bis 4, wobei die zweiten dreieckigen Plättchen eine Größe von gleichen Basisseitenlängen von 512,1 µm und einer Höhe von 92,7 µm oder weniger haben.

6. Die Trennschleifscheibe nach einem der Ansprüche 1 bis 5, ferner aufweisend gebrochene Schleifteilchen feinerer Größenklassen als die ersten und die zweiten dreieckigen Plättchen.

7. Die Trennschleifscheibe nach einem der Ansprüche 1 bis 6, wobei das härtbare Phenolharz einen Massengroßteil an pulverförmigem Novolak-Phenolharz, das eine Harzfließlänge auf schiefer Ebene von weniger als 30 mm gemäß Prüfverfahren ISO 8619:2003 (E) hat, und ein flüssiges Resol-Phenolharz aufweist.

8. Ein Verfahren zum Herstellen einer Trennschleifscheibe (100), das Verfahren aufweisend: Platzieren einer Mischung, aufweisend geformte Schleifteilchen (140, 150), härtbares Phenolharz und mindestens ein Verstärkungsgewebe (114, 115), in ein Formwerkzeug; mindestens teilweises Härten des härtbaren Harzes; und Entfernen der Trennschleifscheibe (100) aus dem Formwerkzeug, wobei die Trennschleifscheibe (100) eine Dicke von weniger als oder gleich 1,6 Millimeter hat, wobei die Trennschleifscheibe (100) das mindestens eine Verstärkungsgewebe (114, 115) und die in einem Phenolbindemittel (125) gehaltenen geformten Schleifteilchen (140, 150) aufweist, wobei die geformten Schleifteilchen (140, 150) erste und zweite dreieckige Schleifplättchen (140, 150) aufweisen, wobei die ersten dreieckigen Plättchen (140) eine erste durchschnittliche maximale Seitenlänge und ein erstes Gesamtgewicht haben, wobei die zweiten dreieckigen Plättchen (150) eine zweite durchschnittliche maximale Seitenlänge und ein zweites Gesamtgewicht haben, wobei das erste und das zweite Gesamtgewicht in Kombination mindestens 30 Gewichtsprozent der Trennschleifscheibe (100) ausmachen, wobei das Verhältnis der ersten durchschnittlichen maximalen Seitenlänge zu der zweiten durchschnittlichen maximalen Seitenlänge 1,25 : 1 bis 5 : 1 beträgt und wobei das Verhältnis des ersten Gesamtgewichts zu dem zweiten Gesamtgewicht 1 : 2 bis 5 : 1 beträgt und wobei ein Massengroßteil des härtbaren Phenolharzes eine Harzfließlänge auf schiefer Ebene von weniger als 30 mm gemäß Prüfverfahren ISO 8619:2003 (E) hat.

9. Das Verfahren nach Anspruch 8, wobei die ersten dreieckigen Plättchen erste dreieckige Pyramidenstümpfe aufweisen.

10. Das Verfahren nach Anspruch 8 oder 9, wobei die zweiten dreieckigen Plättchen zweite dreieckige Pyramidenstümpfe aufweisen.

11. Das Verfahren nach einem der Ansprüche 8 bis 10, wobei die ersten dreieckigen Plättchen und die zweiten dreieckigen Plättchen Alpha-Aluminiumoxid aufweisen.

12. Das Verfahren nach einem der Ansprüche 8 bis 11, wobei die zweiten dreieckigen Plättchen eine Größe von gleichen Basisseitenlängen von 512,1 µm und einer Höhe von 92,7 µm oder weniger haben.

13. Das Verfahren nach einem der Ansprüche 8 bis 12, ferner aufweisend gebrochene Schleifteilchen feinerer Größenklassen als die ersten und die zweiten dreieckigen Plättchen.

14. Das Verfahren nach einem der Ansprüche 8 bis 13, wobei das härtbare Phenolharz einen Massengroßteil an pulverförmigem Novolak-Phenolharz, das eine Harzfließlänge auf schiefer Ebene von weniger als 30 mm gemäß Prüfverfahren ISO 8619:2003 (E) hat, und ein flüssiges Resol-Phenolharz aufweist.

## Revendications

1. Meule à tronçonner abrasive (100) ayant une épaisseur inférieure ou égale à 1,6 millimètre, dans laquelle la meule à tronçonner abrasive (100) comprend au moins une grille de renforcement (114, 116) et des particules abrasives (140, 150) retenues dans un liant phénolique (125) obtenu à partir d'une résine phénolique durcissable, dans laquelle les particules abrasives (140, 150) comprennent des premières et secondes lamelles abrasives triangulaires, dans laquelle les premières lamelles triangulaires (140) ont une première longueur latérale maximale moyenne et un premier poids total, dans laquelle les secondes lamelles triangulaires (150) ont une seconde longueur latérale maximale moyenne et un second poids total, dans laquelle le premier et le second poids total combinés représentent au moins 30 pour cent en poids de la meule à tronçonner abrasive (100), dans laquelle le rapport de la première longueur latérale maximale moyenne à la seconde longueur latérale maximale moyenne va de 1,25:1 à 5:1, et dans laquelle le rapport du premier poids total au second poids total va de 1:2 à 5:1, et dans laquelle une majorité de la résine phénolique durcissable en masse a une distance d'écoulement de résine sur plaque inclinée inférieure à 30 mm selon le procédé d'essai de la norme ISO 8619:2003 (E).

2. Meule à tronçonner abrasive selon la revendication 1, dans laquelle les premières lamelles triangulaires comprennent de premières pyramides triangulaires tronquées.

3. Meule à tronçonner abrasive selon la revendication 1 ou 2, dans laquelle les secondes lamelles triangulaires comprennent de secondes pyramides triangulaires tronquées.

4. Meule à tronçonner abrasive selon l'une quelconque des revendications 1 à 3, dans laquelle les premières lamelles triangulaires et les secondes lamelles triangulaires comprennent de l'alumine alpha.

5. Meule à tronçonner abrasive selon l'une quelconque des revendications 1 à 4, dans laquelle les secondes lamelles triangulaires ont une taille de longueurs latérale de base égales de 512,1 µm et une hauteur de 92,7 µm, ou moins.

6. Meule à tronçonner abrasive selon l'une quelconque des revendications 1 à 5, comprenant en outre des particules abrasives broyées de granulométries plus fines que les premières et secondes lamelles triangulaires.

7. Meule à tronçonner abrasive selon l'une quelconque des revendications 1 à 6, dans laquelle la résine phénolique durcissable comprend une majorité de résine phénolique novolaque en poudre en masse ayant une distance d'écoulement de résine sur plaque inclinée inférieure à 30 mm selon le procédé d'essai de la norme ISO 8619:2003 (E), et une résine liquide phénolique de résol.

8. Procédé de fabrication d'une meule à tronçonner abrasive (100), le procédé comprenant : la mise en place d'un mélange comprenant des particules abrasives (140, 150) façonnées, une résine phénolique durcissable et au moins une grille de renforcement (114, 115) dans un moule ; le durcissement au moins partiel de la résine phénolique durcissable ; et le retrait de la meule à tronçonner abrasive (100) du moule, dans lequel la meule à tronçonner abrasive (100) a une épaisseur inférieure ou égale à 1,6 millimètre, dans lequel la meule à tronçonner abrasive (100) comprend l'au moins une grille de renforcement (114, 115) et les particules abrasives (140, 150) façonnées retenues dans un liant phénolique (125), dans lequel les particules abrasives (140, 150) façonnées comprennent des premières et secondes lamelles abrasives triangulaires (140, 150), dans lequel les premières lamelles triangulaires (140) ont une première longueur latérale maximale moyenne et un premier poids total, dans lequel les secondes lamelles triangulaires (150) ont une seconde longueur latérale maximale moyenne et un second poids total, dans lequel le premier et le second poids total combinés représentent au moins 30 pour cent en poids de la meule à tronçonner abrasive (100), dans lequel le rapport de la première longueur latérale maximale moyenne à la seconde longueur latérale maximale moyenne va de 1,25:1 à 5:1, et dans lequel le rapport du premier poids total au second poids total va de 1:2 à 5:1, et dans lequel une majorité de la résine phénolique durcissable en masse a une distance d'écoulement de résine sur plaque inclinée inférieure à 30 mm selon le procédé d'essai de la norme ISO 8619:2003 (E).

9. Procédé selon la revendication 8, dans lequel les premières lamelles triangulaires comprennent de premières pyramides triangulaires tronquées.

10. Procédé selon la revendication 8 ou 9, dans lequel les secondes lamelles triangulaires comprennent de secondes pyramides triangulaires tronquées.

11. Procédé selon l'une quelconque des revendications 8 à 10, dans lequel les premières lamelles triangulaires et les secondes lamelles triangulaires comprennent de l'alumine alpha.

12. Procédé selon l'une quelconque des revendications 8 à 11, dans lequel les secondes lamelles triangulaires ont une taille de longueurs latérale de base égales de 512,1 µm et une hauteur de 92,7 µm, ou moins.

13. Procédé selon l'une quelconque des revendications 8 à 12, comprenant en outre des particules abrasives broyées de granulométries plus fines que les premières et secondes lamelles triangulaires.

14. Procédé selon l'une quelconque des revendications 8 à 13, dans lequel la résine phénolique durcissable comprend une majorité de résine phénolique novolaque en poudre en masse ayant une distance d'écoulement de résine sur plaque inclinée inférieure à 30 mm selon le procédé d'essai de la norme ISO 8619:2003 (E), et une résine liquide phénolique de résol.
